Europäisches Patentamt

European Patent Office

Office européen des brevets

(19)

(11) EP 1 251 477 A2

(12) **EUROPEAN PATENT APPLICATION**

(43) Date of publication:
23.10.2002 Bulletin 2002/43

(51) Int Cl.⁷: **G09B 7/00**

(21) Application number: 01305970.4

(22) Date of filing: 11.07.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.04.2001 US 284788 P**

(71) Applicant: **Cognisco Limited
Cranfield, Bedfordshire MK43 0BT (GB)**

(72) Inventors:
• **Popeck, Howard
London, N13 4RJ (GB)**
• **Popeck, David
London, N13 4RJ (GB)**

• **Bachelor, Neil
London, N21 1AU (GB)**

(74) Representative: **Loveless, Ian Mark
Reddie & Grose,
16 Theobalds Road
London WC1X 8PL (GB)**

Remarks:
A request for correction of the equations in the text has been filed pursuant to Rule 88 EPC. A decision on the request will be taken during the proceedings before the Examining Division (Guidelines for Examination in the EPO, A-V, 3.).

(54) **Assessment apparatus to test the competence of a candidate**

(57) Assessment apparatus for determining interval data representing an assessment of the interval over which a candidate is deemed to retain a competent level of understanding of the topic covered by the test is described. The assessment apparatus has an input for receiving score data representing marks awarded to a candidate in a test of their understanding of a topic, a store for storing benchmark data representing a level of understanding of the topic beyond that required to be assessed competent in that topic and a processor. The processor is configured to compare the score data with the benchmark data to determine whether the candidate has passed the test. Data indicating whether the candidate has passed or failed the test is outputted. Where the candidate has passed the test the processor determines interval data representing an assessment of the interval over which the candidate is deemed to retain a competent level of understanding of the topic by processing the score data. The interval data is outputted. A timing unit may be provided for timing the interval and for outputting a trigger signal when the interval has elapsed.

The assessment apparatus may be used in a training system providing test delivery and training delivery units.

Fig 2

Printed by Jouve, 75001 PARIS (FR)

EP 1 251 477 A2

**Description**

This invention relates to an assessment apparatus. In particular it relates to an assessment apparatus for determining interval data representing an interval over which a person is considered competent in his understanding of particular subject-matter, or a topic and for outputting the interval data.

A problem with known techniques for assessing the understanding of a person is that they arbitrarily determine when re-testing will be required without taking into account the particular ability of, and understanding achieved by, "the candidate" (the person who is required to undergo assessment and, where his understanding is found to be lacking, re-training). Known assessment techniques also frequently require the person to undergo training whether or not they already have a sufficient level of understanding of the topic; they do not assess the understanding of the person before they are given the training. This results in lost man-days because employees are required to undergo training or re-training when they already have an adequate understanding of the subject-matter of the course. It also results in employees becoming bored with continuous, untargeted training which in turn reduces the effectiveness of any necessary training. In some cases, the failure to monitor the initial level of understanding of a person, and determine a suitable interval after which training or re-training is advisable, may result in the person's competency in a subject becoming reduced to such a level that they act inappropriately in a situation exposing themselves or others to unacceptable levels of risk. In the case of people involved in a safety role it may involve them injuring themselves or others or in failing to mitigate a dangerous situation to the level that is required.

A further problem with known training techniques is that they do not take into account the use made by the particular trainee of the subject-matter for which re-training is necessary. For example, an airline steward is required to give safety demonstrations before every take-off. The airline steward is also trained to handle emergency situations such as procedures to follow should the aeroplane be required to make an emergency landing. Most airline stewards will never be required to use this training in a real emergency situation and so have little if any opportunity to practice their acquired skills. Airline stewards may require a higher level of medical training than ground staff because it is more likely that ground staff will be able to call on fully trained medical staff instead of relying on their own limited skills. We have appreciated that it is therefore necessary to take account of the frequency of use of the acquired skill and the risk involved in the skill being lost.

We have appreciated that it is important to calculate an interval over which the person is predicted to have an adequate level of understanding of the topic and to monitor the interval to indicate when training or re-training should take place.

According to the present invention, there is provided assessment apparatus according to claim 1. By using benchmark data representing a level of understanding of the topic beyond that required to be assessed competent in that topic a candidate who passes a test is guaranteed to be competent in that topic for at least a minium interval. This reduces the risk to the candidate and to others relying on the candidate and can be used to improve the efficiency of training by making sure candidates have a thorough understanding of the topic to help reduce atrophy.

Preferred features of the invention are defined in the dependent claims.

Preferably the interval represented by the interval data is timed and a trigger signal outputted when the interval has elapsed to allow the assessment apparatus to determine a suitable training or re-training interval, monitors the interval and alert a user that training or re-training is required.

Preferably, the processor processes both score data and threshold data to determine the interval data. By using threshold data representing a competent level of understanding of the topic in addition to the score data, the interval may be determined more robustly.

Preferably the assessment apparatus retrieves score data and interval data relating previous tests of the same topic sat by the candidate and uses these in addition to the score data from the test just sat to determine the interval data even more robustly. Using this related data in the essentially predictive determination of the interval data results in more dependable interval determination.

Preferably categories of candidates are defined in the assessment system and a candidate sitting a test indicates his category by inputting category data. The category data is used to select benchmark data appropriate for that category of candidate. This has the advantage of allowing the system to determine interval data for employees requiring different levels of understanding of a topic because of their different jobs or roles.

Preferably each candidate is uniquely identified by candidate identification data which they are required to input to the assessment apparatus. Associated with each candidate is candidate specific data representing the particular candidate's profile such as their ability to retain understanding and/or how their score is related to the amount of training material presented to them or to the number of times they have sat a test. This is advantageous because it allows the interval determination to take account of candidate's personalities such as overconfidence, underconfidence, and general memory capability.

Preferably categories of candidates are associated with a skill utility factor representing the frequency with which a category of candidates use the subject-matter covered by the test. It has been documented by a number of academic sources that retrieval frequency plays a major role in retention of understanding. These studies suggest that the more information is used, the longer it is remembered. Using skill utility factor data in the determination of the interval data results in an improved prediction of the decay of understanding and an improved calculation of the competency interval.

Preferably the assessment apparatus is used in a training system including a test delivery unit. The test delivery unit detects the trigger signal outputted by the timing unit and automatically delivers a test covering the same topic or subject-matter to the candidate as the test last sat by the candidate with which the interval data is associated. Preferably, the training system also has a training delivery unit. When a candidate fails a test, the training delivery unit delivers training on that topic and outputs a trigger signal which is detected by the test delivery unit causing it to deliver a test on that topic to the candidate. Thus an integrated training and assessment system is provided which both assesses the understanding of the candidate and implements remedial action where the candidates knowledge is lacking.

If the candidate requires multiple training sessions to pass the test, the benchmark data may be adapted to represent a higher level of understanding than that previously required. This has the advantage of recognising that the candidate has a problem assimilating the data and may therefore have a problem retaining the data and artificially raising the pass mark for the test to try to ensure that the competency interval is not so short that it is practically useless.

Preferably where a candidate takes multiple attempts to pass a test, having received a pre-training test which he failed followed by at least one session of training and at least on post-training test, both the pre-training and post-training score data is used in determining the interval data. This may help to achieve a more accurate determination of the competency interval.

The present invention will now be described in more detail in accordance with the accompanying drawings in which:

**Figure 1** is a block diagram showing schematically an embodiment of the invention;
**Figure 2** is a diagram showing a training system including assessment apparatus in accordance with an embodiment of the invention;
**Figure 3** is a schematic diagram showing the organisation of candidates into categories, the relevant courses for each category and relevant benchmarks for sub-courses contained within each course for each category of candidates;
**Figure 4** is flow chart showing the operation of assessment apparatus according to an embodiment of the invention;
**Figure 5** is a graph representing the relationship between scores for a pre-training test, post-training test and previous test and their relationship to the appropriate benchmark and threshold; and
**Figure 6** is a graph showing a relationship between the understanding of a candidate and the basis for the determination of the competency interval of the candidate.

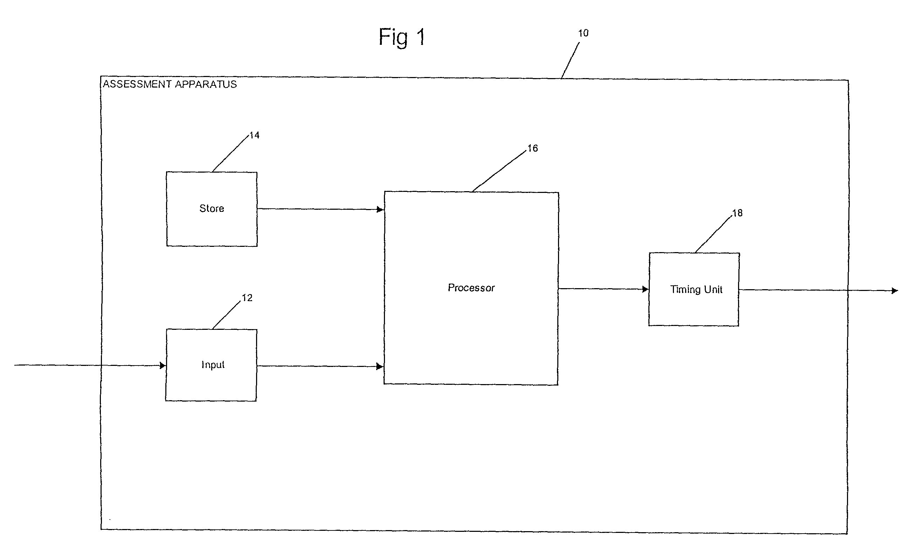

Figure 1 shows a block diagram of assessment apparatus embodying the invention. The assessment apparatus 10 comprises an input 12, a store 14, a processor 16 and a timing unit 18. The processor 16 is coupled to the input 12 and to the store and receives data from both the input 12 and the store 14. The timing unit 18 is coupled to, and receives data from, the processor 16.

Input 12

The input 12 receives data which is required by the assessment apparatus to determine a competency interval. Score data representing marks awarded to a candidate in a test of their understanding of a topic covered by the test is received by the input 12. The input 12 may also receive other data and may pass the data to the store 14 for subsequent use by the processor 16.

Store 14

The store stores a variety of data for use by the processor. For each type of test for which the assessment apparatus is required to determine a competency interval, benchmark data and threshold data are stored. The threshold data represents that level of understanding of the topic covered by the test required to indicate that the candidate has a level of understanding of the topic which makes him competent in relation to the topic. The benchmark data represents a level of understanding of the topic covered by the test which goes beyond that required to be considered competent in that topic. The benchmark data therefore represents a higher level of understanding than that represented by the threshold data.

A candidate may have sat a test covering the same subject-matter, or topic, on a number of previous occasions. The store is also required to store previous score data, that is score data from previous tests of the same topic by that candidate, and previous interval data, that is the interval data from previous tests of the same topic by that candidate. If there are more than one candidate then candidate identification data and category data may also be stored. The candidate identification data uniquely identifies candidates whose details have been entered into the store and may be used in association with score data and interval data to allow the processor to retrieve the appropriate data for processing. The category data may be used by the processor either on its own or in association with candidate identification data to allow the processor to retrieve appropriate benchmark data and threshold data.

Skill utility factor data may be associated with the category data and with testing of particular topics. The skill utility factor data is intended to reflect the frequency with which candidates in a category are expected to be required to apply their understanding of a topic covered by a test and the nature of the topic.

Candidate specific data, including recall disposition data, may also be stored to allow the determination of the competency interval by the assessment apparatus to be tuned to the characteristics of a particular candidate. This data may take into account candidate traits such as their general confidence, their ability to retain knowledge, their ability to recall knowledge and their ability to apply knowledge of one situation to a slightly adapted situation. Regardless of the specific characteristics taken into account in the candidate specific data, the data is uniquely applicable to the candidate. The data may be determined from a number of factors including psychometric and behavioural dimensions and, once testing and training has taken place, historical score and interval data.

Processor 16

The processor 16 receives score data from the input 12 and benchmark data from the store 14 and compares the score data and benchmark data to determine whether score data indicates that the candidate has passed the test which the score data represents. The processor outputs data indicating whether the candidate has passed or failed the test and test date data indicating the date on which the test was taken by the candidate. Where the candidate has passed the test, the score data is processed to determine interval data representing an assessment of the interval over which the candidate is deemed to retain a competent level of understanding of the topic and to output the interval data. The test date data and interval data may be used to monitor when further testing of the candidate on that topic is required.

Although processing to determine the interval data may simply rely on the score data it may use data in addition to the score data in order to refine the assessment of the competency interval and to produce a better estimate of the competency interval. In particular it may use the threshold data to help determine the interval over which the current, elevated level of understanding represented by a passing score will atrophy to the lowest level which is considered competent as represented by the threshold data. It may also, or alternatively, use any of the following: previous score data and previous interval data, candidate specific data, skill utility factor data and score data representing both pre-training tests and post-training tests.

The purpose of processing the score data is to achieve as accurate a prediction as possible of the interval over which the candidate's understanding to the topic covered by the test will decay to a level at which training or re-training is required, for example to mitigate risk. Details of the presently preferred processing technique are described later.

Timing Unit 18

The timing unit 18 takes the interval data outputted by the processor 16, extracts the competency interval from the interval data and times the competency interval. When the competency interval has elapsed, the timing unit outputs a trigger signal indicating that the candidate requires testing on a particular topic to reassess their understanding. If their understanding of the topic is found to be lacking, training or re-training can be delivered to the candidate, followed by post-training testing. This allows targeted training of candidates if, and when, they require it. Several iterations of training may be required to bring the candidate's understanding up to the benchmark level.

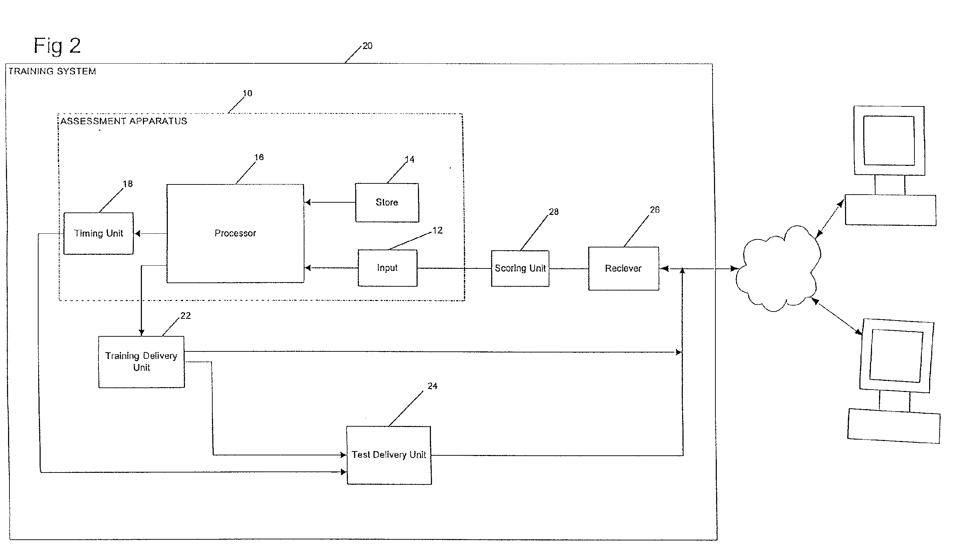

Figure 2 shows a block diagram of a training system including assessment apparatus embodying the invention. The training system 20 comprises assessment apparatus 10, a training delivery unit 22, a test delivery unit 24, a receiver 26 and a scoring unit 28. Preferably, the training system 20 is implemented on a training server and test and training material is delivered to a candidate over a network such as a virtual private network, LAN, WAN or the Internet. The test and training material may be displayed on a workstation, personal computer or dumb terminal (the "terminal") linked to the network. The candidate may use the keyboard and/or mouse or other input device associated with the terminal to input his responses to the test. The terminal preferably performs no processing but merely captures the candidates responses to the test and causes them to be transmitted to the training server. The terminal also monitors when training delivery is complete and sends a training complete signal to the training server.

Training delivery unit 22

The training delivery unit 22 is coupled to the processor 16 and to the test delivery unit 24. It monitors the output data from the processor 16 and detects when the output data indicates that a candidate has failed a test. When this occurs, the training delivery unit 22 notes the topic covered by test which was failed and the candidate who failed the test and causes training data on that topic to be delivered to the candidate. Training data may be delivered to a terminal to which the candidate has access as a document for display on the display associated with the terminal, or for printing by a printer associated with the terminal.

Test Delivery unit 24

The test delivery unit 24 is coupled to the output of the timing unit 18 and also to an output of the training delivery unit 22. When a candidate has passed a test, the timing unit times the competency interval and, once the competency interval has elapsed, outputs a trigger signal. The trigger signal is used by the test delivery unit 24 to trigger delivery to the particular candidate of a test on the same topic as the test that was previously passed. Training does not precede the re-test and the test is therefore a pre-training test.
The test delivery unit 24 is also required to deliver a test to a candidate if the candidate has failed the previous test. Upon failing a test, the candidate is presented with training material which is delivered by the training delivery unit 22. After the training has been delivered, the training delivery unit 22 outputs a trigger signal, the "second" trigger signal. When a second trigger signal is detected by the test delivery unit 24, it delivers a "post-training" test to the candidate on the same topic as the previous failed test and training material. The candidate's response to the test is processed in the normal manner, with score data being inputted to the assessment apparatus 10 for assessment of whether the candidate has passed or failed the test and, if the candidate has passed the test, the new competency interval.

Receiver 26

The receiver 26 receives data from the terminal on which the candidate performs the test and on which training material is delivered. The data received comprises test data representing the candidate's response or responses to the test and may also comprise a signal indicating that training delivery is complete for use by the training delivery unit 22 to initiate output of the second trigger signal.

Scoring unit 28

The scoring unit 28 is required to generate score data from the test data. It is coupled to the receiver 26 and tot he input 12 of the assessment apparatus 10. The test data is compared with scoring data and marks are awarded on the basis of comparison. The score data therefore represents the marks awarded to the candidate in the test of their understanding of the topic covered by the test. Once the score data has been generated by the scoring unit 28 it is outputted for use by the processor 16 in determining whether or not the candidate has passed the test.

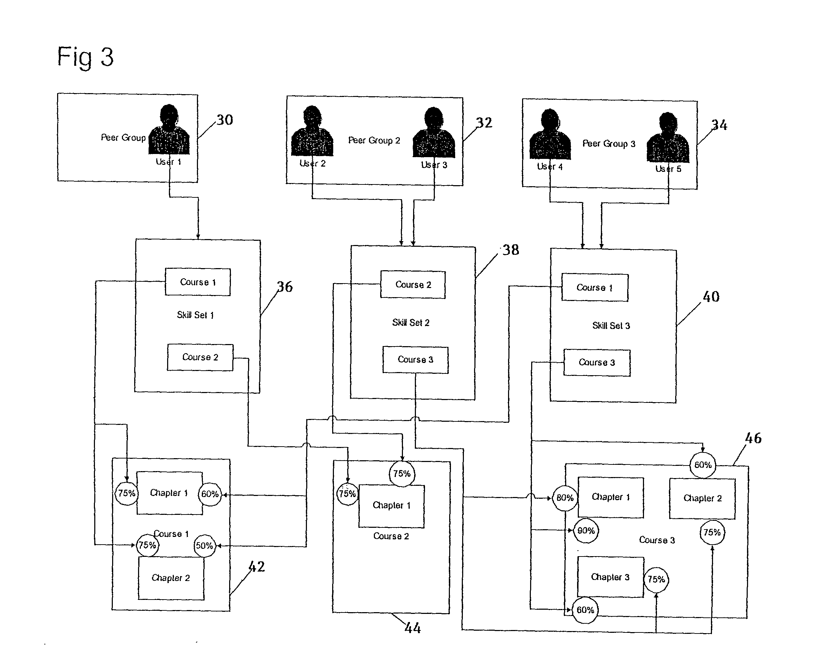

Figure 3 shows the way in which candidates may be grouped into categories and that different categories of candidates may be required to achieve different scores to pass the same test. Courses may be broken down into a number of chapters and the chapters may be subdivided into sub-chapters. "Topic" is intended to mean the subject-matter covered by a particular test. It is not necessarily limited to the subject-matter of a sub-chapter or chapter but may cover the entire subject-matter of the course. Testing may be implemented at course, chapter or sub-chapter level.
In figure 3, three categories of candidate have been identified at 30 (category or peer group 1), at 32 (peer group 2) and at 34 (peer group 3). These peer groups, or categories, may have any number of candidates associated with them. A candidate may, however, be associated with only one category. Each category is assigned a relevant skill set 36, 38, 40. The skills sets may be overlapping or unique. The skill set defines the courses covering topics which must be understood by the candidates in the category. Benchmarks for each course, or element of course eg chapter or sub-chapter, and for each category are set. This allows an organisation to require different levels of understanding of the same topic by different category of employee, 42, 44 and 46. For example, category 1 candidates are required to meet a benchmark of 75% for chapter 1 of course 1 and 75% for chapter 2 of course 1, whilst category 2 candidates are only required to meet a benchmark of 60% for chapter 1 of course 1 and 50% for chapter 2 of course 2. Likewise, category 3 candidates are required to meet a benchmark of 90% for chapter 1 of course 3, 60% for chapter 2 of course 3 and 60% for chapter 3 of course 3, whilst category 2 candidates are required to meet benchmarks of 80% for chapter 1, and 75% for chapters 2 and 3 of course 3.
The appropriate benchmarks for each topic required by each category are saved in the store and the processor retrieves the appropriate benchmark by choosing the benchmark associated with the particular category indicated by the candidate. Alternatively, a candidate may simply be required to input unique candidate identification data, such as a pin, and the training system may check a database to determine the category assigned to the candidate.

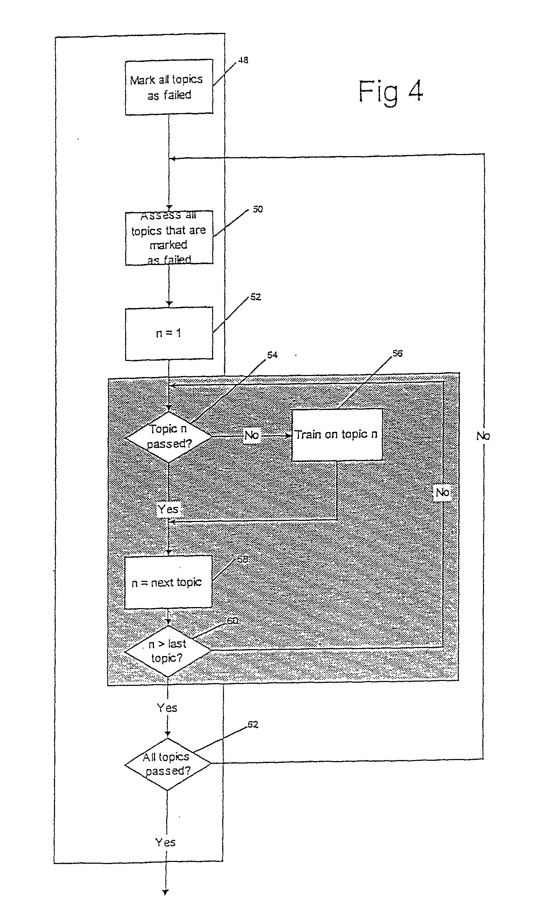

Figure 4 is a flow chart showing the operation of the training system for a particular candidate required to be tested on a course comprised of a number of chapters. After the candidate's competency interval for that particular course has expired, or when the candidate is first required to undertake assessment on the course, all chapters in the course are marked as failed 48. Pretraining testing of each chapter marked as failed is then delivered to the candidate who submits test data for each chapter which is assessed by attributing a score to their response and processing the score data to determine whether the candidate has passed 50. Starting with the first chapter of the course, the training system determines whether the chapter has been passed 54. If the candidate has not reached the appropriate benchmark level required for that chapter, training material is delivered to the candidate on that chapter 56. Once the training material has been delivered and the candidate has completed the training, or if the candidate has passed the chapter, the system increments a counter to consider the next chapter 58. A test is performed to check whether the last chapter has been reached 60. If the last chapter has not been reached, steps 54, 56, 58 and 60 are repeated as necessary until the last chapter is reached. When the last chapter is reached a check is made whether all chapters have been passed by the candidate 62. If one or more chapters have not been passed, the system returns to step 50. At any time the candidate may log out of the training system. The training system stores information about what testing is outstanding and when the candidate logs back in to the training system he is presented with an option to choose one of the outstanding topics for assessment. A supervisor may be notified if the candidate does not complete the required assessment and pass the required assessment within a certain time scale.

If the candidate has passed all the chapters in the course he has passed the topic and the training system may offer a choice of other topics on which assessment is required or may indicate to the candidate his competency interval so that the candidate knows when his next assessment is due.

Preferred processing to determine interval data

The determination of an accurate competency interval is aided by using as much information on the past and present performance of the candidate, information on the importance of understanding the topic covered by the test, frequency of use of the topic and any other available relevant information. The more accurate the determination of the competency interval, the less unnecessary testing and training of the candidate and the lower the risk to the candidate and others posed by the candidate having fallen below the required level of knowledge and understanding of the topic.

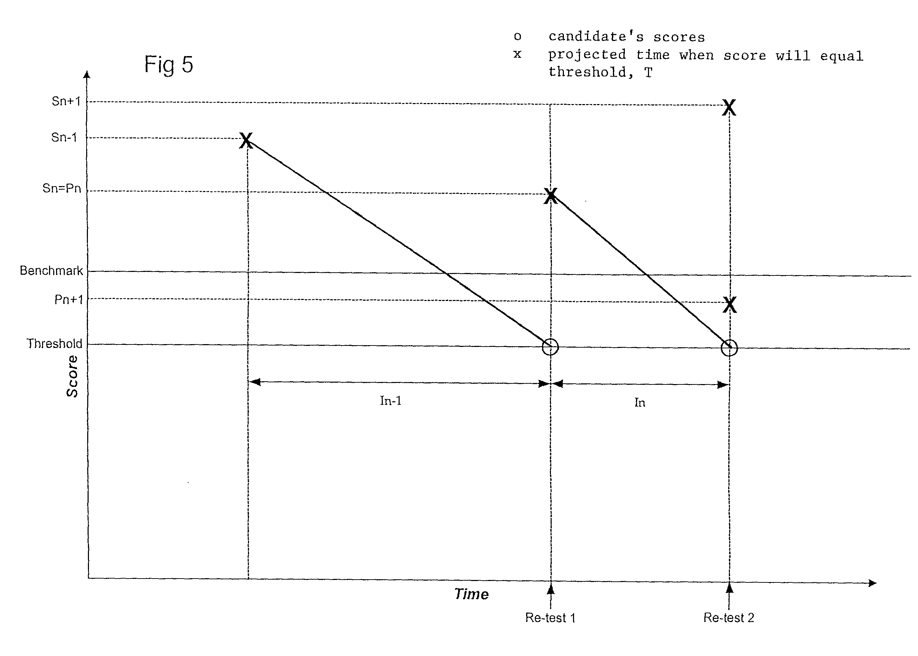

Figure 5 is a graph showing a previous score for a test, Sn-1, the previous competency interval, In-1, a current score for the same test, Sn, and the appropriate benchmark, B, and threshold, T.

The candidate achieved a score, $S_{n-1}$, well above the benchmark in his $_{n-1}$th test. An estimate of when the candidate's score will fall to the threshold level, T, is determined generating the competency interval, $I_{n-1}$. After the time $I_{n-1}$ has elapsed, the candidate is re-tested, marked re-test 1, and achieves a new pre-test score Pn which is also above the benchmark. A new competency interval is therefore calculated, $I_n$. At each re-test, the candidate is subjected to an initial, pre-training, test followed if necessary by as many iterations of training and post-training testing as it takes for the candidate to pass the test.

In the presently preferred embodiment of the assessment apparatus, the competency interval at the first assessment of a topic is calculated from the following equation:

$$I_n = \frac{S_n}{B} \cdot I_0$$

where $I_n$ is the competency interval, B is the appropriate benchmark, and $I_0$ is a seed interval determined by the training system provider as a default interval for a candidate achieving the benchmark for that topic and Sn is a score achieved by the candidate which is higher than the benchmark indicating that the candidate has passed the test. In the case where the candidate passes the test without requiring any training, Sn = Pn.

Once that competency interval has elapsed, the determination of a new competency interval for the candidate can take account of the historic score and interval data in an attempt to refine the interval calculation. The competency interval for subsequent tests is determined as a combination of three competency factors:

competency interval = $A^B.C$

The first factor, A, is a measure of the combination of the difference between the pre-training current test score, $P_n$, the previous passing score from the test, $S_{n-1}$, and the amount by which the candidate's previous score exceeded the threshold.

$$A = \sum_{P_n = S_n}^{n-1} \quad if P_n < S_{n-}$$

$$A = S_n - T \quad if P_n \, S_{n-}$$

where $P_n$ represents the candidate's score on a pre-training test for the current test interval, $S_{n-1}$ represents the candidate's score for the previous test on the same topic which the candidate passed ($S_{n-1}$ may be equal to $P_{n-1}$ if the candidate previously passed the test without requiring training), and T represents the threshold which identifies the level of understanding or knowledge of the topic which is deemed to be just competent. It adapts the previous competency interval according to the difference between the current pre-test score and previous passing test score.

$$B = \frac{1}{SUF \cdot CSP}$$

where SUF is the skill utility factor and CSP is the candidate specific profile.

$$C = \frac{S_n \cdot I_{n-1}}{S_{n-1}}$$

Where $S_n$ is the score at the current test interval which is a passing score. If $P_n$ is a passing score then $S_n = P_n$. If $P_n$ is a fail, then $S_n$ is the score achieved after as many iterations of training and testing needed for the candidate to pass the test.

Hence if the current passing score is greater than the previous passing score, then factor C will tend to cause the current interval to be longer than the previous interval.

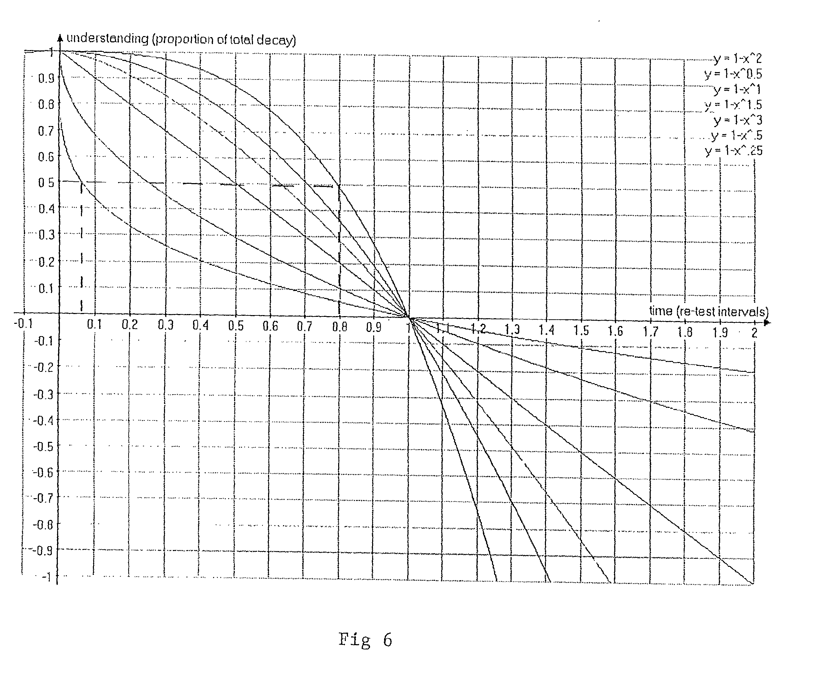

Figure 6 shows how the combination of the knowledge decay factor and candidate specific profile affect the competency interval. Altering the knowledge decay factor or candidate specific data effectively moves the estimation to a different curve. For example, the left hand curve in the region (x>1, y>1) relates to the equation y = 1-x¼ and the right hand curve to the equation $y = 1-x^{1/(1/3)}$. Assuming a threshold of 50%, reading from 0.5 on the y axis, we see next the competency intervals are same base value multiplied by 0.06 and 0.8 respectively. Where the knowledge decay factor multiplied by the candidate specific profile is high (y = 1-x¼) the competency interval is relatively short and where the knowledge decay factor multiplied by the candidate specific profile is low ($y = 1-x^{1/(1/3)}$) then the competency interval is relatively long.

Table 1 below shows data for two candidates, sitting two of three courses, their scores, appropriate benchmarks, thresholds, skill utility factors, candidate specific profiles, and the calculated competency interval in days. In the training system of the example, if the candidate does not pass a pre-training test, he is automatically assigned a competency interval of two days to allow the training system to prompt him to perform a re-test within a reasonable timescale. A competency interval of 2 days, therefore, does not indicate that the candidate is competent in that topic but rather that the candidate does not yet have the necessary knowledge and understanding of that topic. From the table it is clear that candidate 1161 is required to be competent in the topic of courses 153 and 159 at least. For course 153, candidate 1161 took a first pre-training test on which he achieved a score of 22%, well below the benchmark of 70%. Training would then have been delivered to the candidate who achieved a score of 78% in a first post-training test, thereby exceeding the required level of understanding of the subject-matter covered by the course. A competency interval is therefore estimated and in this the interval is determined as 218 days. This being the first test of this course taken by the candidate, the competency interval is determined from the score, benchmark and seed interval which in this case is $I_0$=196. The number of days is rounded down to give a competency interval of 218 days.

As soon as the 218 days have elapsed, candidate 1161 is prompted to take a further test for course 153. A pre-training test is delivered to the candidate, who scores 36%. This is below the threshold and the candidate has therefore failed the test. The processor outputs data indicating that the candidate has failed the test. This is detected by the training delivery unit which delivers training to the candidate. Once the training has been delivered, the candidate is required to take a post-training test in which he scores 78%. Using the previous (passing) test score of 78%, the threshold T = 50%, the current passing score of Sn = 81%, the current pre-training (failing) score $P_n$ = 362, the skill utility factor of 0.9 and the candidate specific profile of 0.6, the new competency interval is determined to the nearest day as 103 days.

A candidate's skill utility factor may change as shown in the example of table 1. A reason for the change may be detection of anomalies in the candidate's responses to the test.

| Candidate ID | Course | pre- or post- | No. of competency | Appropriate benchmark | Threshold | Score | Candidate specific | Risk factor | Competency interval (in days) |
|---|---|---|---|---|---|---|---|---|---|
| 1161 | 153 | pre | 1 | 70% | 50% | 22% | 0.6 | 0.9 | 2 |
| 1161 | 153 | post | 1 | 70% | 50% | 78% | 0.6 | 0.9 | 218 |
| 1161 | 153 | pre | 2 | 70% | 50% | 36% | 0.6 | 0.9 | 2 |
| 1161 | 153 | post | 2 | 70% | 50% | 78% | 0.6 | 0.9 | 103 |
| 1161 | 153 | pre | 3 | 70% | 50% | 32% | 0.6 | 0.85 | 2 |
| 1161 | 153 | post | 3 | 80% | 50% | 76% | 0.6 | 0.85 | 2 |
| 1161 | 153 | post | 3 | 80% | 50% | 81% | 0.6 | 0.85 | 40 |
| 1161 | 153 | pre | 4 | 80% | 50% | 60% | 0.6 | 0.85 | 2 |
| 1161 | 153 | post | 4 | 80% | 50% | 86% | 0.6 | 0.85 | 92 |
| 1161 | 159 | pre | 1 | 85% | 65% | 60% | 0.9 | 0.9 | 2 |
| 1161 | 159 | post | 1 | 85% | 65% | 60% | 0.9 | 0.9 | 2 |
| 1161 | 159 | post | 1 | 85% | 65% | 78% | 0.9 | 0.9 | 2 |
| 1161 | 159 | post | 1 | 85% | 65% | 90% | 0.9 | 0.9 | 208 |
| 1162 | 147 | pre | 1 | 80% | 65% | 13% | 0.9 | 0.9 | 2 |
| 1162 | 147 | post | 1 | 80% | 65% | 24% | 0.9 | 0.9 | 2 |
| 1162 | 147 | post | 1 | 80% | 65% | 35% | 0.9 | 0.9 | 2 |
| 1162 | 147 | post | 1 | 80% | 65% | 62% | 0.9 | 0.9 | 2 |
| 1162 | 153 | pre | 1 | 70% | 65% | 48% | 0.6 | 0.9 | 2 |
| 1162 | 153 | post | 1 | 70% | 65% | 54% | 0.6 | 0.9 | 2 |
| 1162 | 153 | post | 1 | 70% | 65% | 90% | 0.6 | 0.9 | 252 |
| 1162 | 153 | pre | 2 | 70% | 65% | 85% | 0.6 | 0.9 | 356 |

With respect to the above description, it is to be realised that equivalent apparatus and methods are deemed readily apparent to one skilled in the art, and all equivalent apparatus and methods to those illustrated in the drawings and described in the specification are intended to be encompassed by the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

It should further be noted that the features described by reference to particular figures and at different points of the description may be used in combinations other than those particularly described or shown. All such modifications are encompassed within the scope of the invention as set forth in the following claims.

For example, if the entire training system is not server implemented, the training delivery unit 22 may cause training material to be posted out the candidate or may alert the candidate to collect the training material. The training system would then allow the candidate to input data acknowledging that they had received and read the training material and wished to take the post-training test.

The benchmark for any topic may be varied depending on the rate of atrophy associated with the various elements the skill covered by the topic.

If a course consists of a number of chapters or chapters and sub-chapters and the assessment or testing of the subject-matter of the course is split according to chapter and/or sub-chapter, it may be possible for a candidate to be tested on and pass a number of chapter and sub-chapters but not to pass others. The candidate is prevented from being assigned a meaningful competency interval unless they have passed all elements of the course.

## Claims

1. Assessment apparatus comprising:

   an input for receiving score data representing marks awarded to a candidate in a test of their understanding of a topic;
   a store for storing benchmark data representing a level of understanding of the topic beyond that required to be assessed competent in that topic;
   a processor, coupled to the input and to the store, the processor configured:

   a) to compare the score data with the benchmark data to determine whether the candidate has passed the test;
   b) to output data indicating whether the candidate has passed or failed the test; and where the candidate has passed the test
   c) to determine interval data representing an assessment of the interval over which the candidate is deemed to retain a competent level of understanding of the topic by processing the score data; and
   d) to output the interval data.

2. Assessment apparatus according to claim 1, **characterised in that** it further comprises a timing unit, coupled to the processor, for timing the interval represented in the interval data and, when the interval has elapsed, for outputting a trigger signal.

3. Assessment apparatus according to either claim 1 or claim 2, **characterised in that** the store is configured to store threshold data representing a competent level of understanding of the topic and **in that** the processor is configured to use the threshold data to determine the interval data.

4. Assessment apparatus according to any of claims 1 to 3, **characterised in that** the processor is further configured:

   a) to determine whether the candidate has previously passed the test;
   and where the candidate has previously passed the test
   b) to retrieve previous score data representing marks previously awarded to a candidate in the test and previous interval data representing a previous assessment of the interval over which the candidate is deemed to retain a competent level of understanding of the topic; and
   c) to use the previous score data and the previous interval data to determine the interval data.

5. Assessment apparatus according to any of the preceding claims, **characterised in that**:

the input is further configured to receive category data representing a category of candidate;
the store is configured to store benchmark data representing a level of understanding of the topic required by each category of candidate;
the processor is configured to compare the score data with benchmark data appropriate to the category of candidate indicated by the category data.

6. Assessment apparatus according to any of the preceding claims, **characterised in that**:

the input is configured to receive candidate identification data uniquely identifying a candidate;
the store is configured to store candidate specific profile data representing each uniquely identified candidate's ability to retain understanding; and
the processor is configured to use the candidate specific profile data representing the uniquely identified candidate to determine the interval data.

7. Assessment apparatus according to any of the preceding claims, **characterised in that**:

the input is configured to receive category data representing a category of candidate;
the store is configured to store skill utility factor data representing the frequency which a category of candidate is required to apply his understanding of the topic; and
the processor is configured to use the skill utility factor data representing the category of candidate identified by the category data to determine the interval data.

8. A training system comprising:

assessment apparatus according to any of the preceding claims; and
a test delivery unit, coupled to the output of the timing unit, for delivering a test covering the same topic to the candidate when the trigger signal is detected.

9. A training system according to claim 8, **characterised in that** it further comprises a training delivery unit, coupled to the processor and to the test delivery unit, configured to detect output data indicating the candidate has failed the test, to deliver training to the candidate on the topic covered by the test when the candidate has failed the test, and, when training delivery is complete, to output a second trigger signal, the test delivery unit being further configured to detect the second trigger signal and to deliver a post-training test covering the same topic.

10. A training system according to claim 9, **characterised in that** the processor is further configured to adapt the benchmark data to represent a higher level of understanding than is represented by the stored benchmark data depending on number of post-training tests on the topic delivered by the test delivery unit.

11. A training system according to claim 9 or claim 10, **characterised in that** the processor is further configured to use score data representing both marks awarded to a candidate in a pre-training test and marks awarded to a candidate in a post-training test to determine the interval data.

12. A computer program comprising program instructions which, when loaded into a computer, constitute the assessment apparatus of any of claims 1 to 7.

13. A computer program comprising program instructions which, when loaded into a computer, constitute the training system of any of claims 8 to 11.

14. A method of determining a competency interval over which a candidate is deemed fit to practice comprising the steps of:

a) receiving score data representing marks awarded to a candidate in a test of their understanding of a topic;
b) storing benchmark data representing a level of understanding of the topic beyond that required to be assessed competent in that topic;
c) processing the data by:

a) comparing the score data with the benchmark data to determine whether the candidate has passed the test;
b) outputting data indicating whether the candidate has passed or failed the test; and where the candidate has passed the test

c) determining interval data representing an assessment of the interval over which the candidate is deemed to retain a competent level of understanding of the topic by processing the score data; and

d) outputting the interval data.

**15.** A method according to claim 14, **characterised in that** it further comprises the steps of timing the interval represented in the interval data and, when the interval has elapsed, outputting a trigger signal.

**16.** A method according to either claim 14 or claim 15, **characterised in that** it further comprises the step of storing threshold data representing a competent level of understanding of the topic and wherein the step of processing the data additionally uses the threshold data to determine the interval data.

**17.** A method according to any of claims 14 to 16, **characterised in that** the processing step further comprises:

a) determining whether the candidate has previously passed the test;

and where the candidate has previously passed the test

b) retrieving previous score data representing marks previously awarded to a candidate in the test and previous interval data representing a previous assessment of the interval over which the candidate is deemed to retain a competent level of understanding of the topic; and

c) additionally using the previous score data and the previous interval data to determine the interval data.

**18.** A method according to any of claims 14 to 17,
**characterised in that** it further comprises the step of:

receiving category data representing a category of candidate; wherein

the step of storing benchmark data includes storing benchmark data representing a level of understanding of the topic required by each category of candidate; and

the step of comparing the score data with benchmark data uses benchmark data appropriate to the category of candidate indicated by the category data.

**19.** A method according to any of claims 14 to 18, **characterised in that** it further comprises the steps of:

storing candidate specific profile data representing each uniquely identified candidate's ability to retain understanding;

receiving candidate identification data uniquely identifying a candidate and using the candidate identification data to retrieve the identified candidate specific profile data; and

wherein the step of processing the data additionally uses the candidate specific profile data to determine the interval data.

**20.** A method according to any of claims 14 to 19, **characterised in that** it further comprises the steps of:

storing skill utility factor data representing the frequency which a candidate is required to apply his understanding of a topic;

receiving category data representing a category of candidate;

and wherein

the processing step additionally uses the skill utility factor data representing the category of candidate identified by the category data to determine the interval data.

**21.** A method of training a candidate to maintain their understanding of a topic at a competent level comprising:

a) a method according to any of claims 15 to 20;

b) detecting when the trigger signal is outputted; and

c) delivering a test covering the same topic to the candidate.

**22.** A method according to claim 21, **characterised in that** it further comprises the steps of:

a) detecting output data indicating the candidate has failed the test;

b) delivering training to the candidate on the topic covered by the test when the candidate has failed the test; and

c) when training delivery is complete, outputting a second trigger signal;
d) detecting the second trigger signal; and
e) delivering a post-training test covering the same topic.

**23.** A method according to claim 22, **characterised by** the step of adapting the benchmark data to represent a higher level of understanding than is represented by the stored benchmark data dependent on number of post-training tests on the topic delivered to the candidate.

**24.** A method according to claim 22 or 23, **characterised by** the processing step additionally using score data representing both marks awarded to a candidate in a pre-training test and marks awarded to a candidate in a post-training test to determine the interval data.

**25.** A computer program comprising program instructions which, when loaded into a computer, constitute the method of any of claims 15 to 24.

Fig 1

ASSESSMENT APPARATUS — 10

Store — 14

Input — 12

Processor — 16

Timing Unit — 18

Fig 2

TRAINING SYSTEM

ASSESSMENT APPARATUS

Store

Input

Processor

Timing Unit

Training Delivery Unit

Test Delivery Unit

Scoring Unit

Reciever

14

12

16

18

22

24

28

26

10

20

Fig 3

Fig 4

Mark all topics
as failed _48_

Assess all
topics that are
marked
as failed _50_

n = 1 _52_

_54_ Topic n
passed? —No→ Train on topic n _56_

Yes

n = next topic _58_

_60_ n > last
topic?

Yes

All topics
passed? _62_

No

No

Yes

Fig 5

o    candidate's scores
x    projected time when score will equal
     threshold, T

Fig 6